# EUROPÄISCHE PATENTANMELDUNG

(11) **EP 1 959 166 A2**
(43) Veröffentlichungstag der Anmeldung: **20.08.2008**
(21) Anmeldenummer: 06835804.3
(22) Anmeldetag: 13.11.2006
(51) Int. Cl.: F16H 48/20, B60K 17/16

(54) **SELBSTSPERRENDES DIFFERENTIAL FÜR EIN TRANSPORTMITTEL**

(30) Priorität: 30.11.2005 RU 2005137272
(71) Anmelder: Krasikov, Valeriy Nikolayevich, Chelyabinsk 454021 (RU)
(72) Erfinder: Krasikov, Valeriy Nikolayevich, Chelyabinsk 454021 (RU)
(74) Vertreter: Jeck, Anton
(86) Internationale Anmeldenummer: PCT/RU2006/000591
(87) Internationale Veröffentlichungsnummer: WO 2007/064245

(57) **Zusammenfassung**

Die Erfindung bezieht sich auf ein Kfz-Selbstsperrdifferential, das ein Antriebsgehäuse aufweist, bei dem die mit den Halbachsen verbundenen Halbachsenelemente zueinander koaxial ausgerichtet sind, wobei diese Elemente auf der Außenfläche Spiralnuten gegenläufiger Richtung der Spirale aufweisen. Es weist ebenso einen Wälzkörper in Form von Kugeln auf, die kettenweise mindestens einen im Antriebsgehäuse ausgebildeten, geschlossenen Kanal füllen, wobei der Teil des Kanals zum Eintauchen von Kugelsegmenten in die Spiralnuten geöffnet ist. Der geschlossene Kanal ist im Längsschnitt rechteckig mit abgerundeten Außenecken ausgeführt. Der Querschnitt der Stränge beim rechteckigen, geschlossenen Kanal dem Kugeldurchmesser ist gleich und die Kugelmenge im Kanal ist ungerade.

## Beschreibung

Die Erfindung betrifft den Automobilbau und kann in Differentialantrieben von Fahrzeugen eingesetzt werden, die eine Möglichkeit zur automatischen Radsperre vorsehen.

Es ist ein Kraftfahrzeug-Selbstsperrdifferential (Kfz-Selbstsperrdifferential) bekannt, das vom Anmelder als Prototyp gewählt wurde. Es enthält ein Antriebsgehäuse, bei dem mit den Halbachsen verbundene Halbachsenelemente zueinander koaxial ausgerichtet sind. Dabei weisen diese Elemente auf der Außenfläche Spiralnuten mit gegenläufiger Richtung der Spirale sowie Wälzkörper in Form von Kugeln auf. Sie füllen kettenartig mindestens einen im Antriebsgehäuse ausgebildeten, geschlossenen Kanal. Ein Teil des geschlossenen Kanals bildet einen Arbeitsstrang. Dieser Kanalteil ist zum Eintauchen von Kugelsegmenten in die Spiralnuten der Halbachsenelemente geöffnet.

Der Arbeitsstrang ist mit dem längslaufenden Rücklaufstrang des Kanals durch seitliche, ringförmige Kanalbereiche verbunden. Außerdem ist der Rücklaufstrang des Kanals ringförmig ausgeführt. Er weist eine Breite auf, die größer als ein und kleiner als zwei Kugeldurchmesser ist (s. Beschreibung der Erfindung SU 1507603 vom 17.11.87, veröff. am 15.09.89, W60K017/20, W.-O. A. Ljusi).

Zu den Nachteilen des Prototyps gehört der komplizierte Aufbau, der mit der ringförmigen Kanalausführung verbunden ist. Im Arbeitsstrang des Kanals sind die Kugeln in einer Reihe angeordnet. Der Rücklaufstrang des Kanals weist aber im Schnitt eine wesentlich größere Dimension (die Breite ist größer als ein, aber kleiner als zwei Kugeldurchmesser) auf, um die Kugeln innerhalb schachbrettartig anzuordnen. Der Rücklaufstrang des Kanals und die ringförmige Ausführung machen die Anfertigung des ganzen, geschlossenen, ringförmigen Kanals aufwändiger. Außerdem werden die Abmessungen des Differentials wesentlich vergrößert.

Außerdem schließt die Form des geschlossenen Kanals, der eine gleichmäßige, ringförmige Ausführung aufweist, eine wirksame Selbstbremsung der Kugelkette aus. Diese Kugelkette ist zur vollen Sperre des automatischen Differentials beim Rutschen des Kraftfahrzeugs erforderlich.

Unter der Selbstbremsung wird die Kraft verstanden, die der Bewegung der Kugeln im geschlossenen Kanal entgegenwirkt. Im Kanal, der die gleichen, ringförmigen Rundungen aufweist, sind die Bremskräfte der Kugelkette sehr schwach. Deshalb musste der Erfinder des Prototyps den Durchmesser des Rücklaufkanals vergrößern, um die Selbstbremskraft der Kugelkette während der Bewegung zur erhöhen.

In diesem Kanal, dessen Durchmesser größer als ein, aber kleiner als zwei Kugeldurchmesser ist, sind die Wälzkörper schachbrettartig angeordnet. Bei der Bewegung der Kugelkette werden die Kugeln auseinander gespreizt. Ihre Reibungskraft steigt an der Kanalwand an. Die Differentialausführung ist durch einen niedrigen Wirkungsgrad der Selbstsperrung des Geräts und dessen beschränkte Funktion bei niedrigen Geschwindigkeiten gekennzeichnet, denn die Selbstsperrung erfolgt hauptsächlich bei der Beschleunigung des Fahrzeugs. Im Prototyp (Erfindung SU 1507603, letzter Absatz in der Beschreibung) heißt es: "...die Kräfte, die von den Kugeln von einem Halbachsenrad (Halbachsenelement) auf das andere übertragen werden, nehmen auf der Strecke des endlosen Kanals ab. Der Kanal hat je nach dem erforderlichen Sperrfaktor die baulich wählbare Krümmung und Breite des Kanalteils. Beim Bremsen mit dem Motor sowie im Rückwärtsgang ist die Selbstbremsung kleiner und hängt praktisch vom Wirkungsgrad der Kraftübertragung von einem Halbachsenrad an die Kugel sowie vom Wirkungsgrad der Kraftübertragung von den Kugeln an das Halbachsenrad ab".

Darüber hinaus wird eine Verrückung der Kugeln während der Kfz-Bewegung aus der schachbrettartigen Ordnung in eine Reihe hoher Präzision bei der Anfertigung des ganzen, geschlossenen Kanals erforderlich. Es vergrößert die Kugelmenge und die Abmessungen des ganzen Geräts und vermindert dessen Festigkeit.

Die Aufgabe der Erfindung ist eine Vereinfachung der Bauart, eine Verminderung der Abmessungen und eine Erhöhung der Fertigungsgerechtheit, der Festigkeit und des Wirkungsgrads der Selbstsperrung.

Das Kfz-Selbstsperrdifferential enthält ein Antriebsgehäuse. Bei diesem Antriebsgehäuse sind mit den Halbachsen verbundene Halbachsenelemente zueinander koaxial ausgerichtet. Dabei weisen diese Elemente auf der Außenfläche Spiralnuten mit der gegenläufigen Richtung der Spirale und Wälzkörper in Form von Kugeln auf. Sie füllen kettenartig mindestens einen im Antriebsgehäuse ausgebildeten, geschlossenen Kanal. Ein Kanalteil ist zum Eintauchen von Kugelsegmenten in die Spiralnuten der Halbachsenelemente geöffnet. Gemäß der Erfindung ist der geschlossene Kanal im Längsschnitt rechteckig mit abgerundeten Außenecken ausgebildet. Der Querschnitt der Stränge beim rechteckigen, geschlossenen Kanal ist dem Kugeldurchmesser gleich. Die Kugelmenge im Kanal beläuft sich auf eine ungerade Zahl.

Der geschlossene Kanal wird rechteckig ausgeführt. Er weist einen Durchmesser auf, der dem Kugeldurchmesser gleich ist. Dadurch ist der Aufbau des Differentials einfacher und technikgerechter. Es wird vorgeschlagen, den Arbeits- und Rücklaufstrang mit den geradlinigen Strecken mit demselben Durchmesser im rechten Winkel zu verbinden, wobei nur die Außenecken des gebildeten Rechtecks abgerundet werden. Diese Lösung ermöglicht es, den geradlinigen Arbeitsstrang und den Rücklaufstrang möglichst nah aneinander zu bringen. Der Ersatz des breiten Kanalstrangs durch die schachbrettartige Anordnung der Kugeln und ringförmigen Verbindungsteile mit dem veränderlichen Schnitt durch senkrechte, geradlinige Strecken führt den geschlossenen, rechteckigen Kanal viel platzsparender aus. Er ermöglicht es, die Kugelmenge in der Kette wesentlich zu vermindern. Die Abmessungen des selbstsperrenden Geräts übersteigen nicht die Abmessungen eines standardmäßigen, klassischen Differentials, das zur Zeit im Einsatz ist. Es löst das Problem der Montage des Differentials im Fahrzeug, indem das standardmäßige Differential ohne Sperre durch das selbstsperrende Gerät ersetzt wird.

Der rechteckige Kanal ermöglicht die wirksamere Selbstbremsung der Kugelkette durch die Bewegung der Kugeln über die rechten Winkel des geschlossenen Kanals. Es erlaubt, ein automatisches Differential mit einem maximalen Sperrungswirkungsgrad (fast 100 %) und einem maximalen Differenzierungswirkungsgrad zu entwickeln, denn es besteht keine veränderliche Belastung (Auskeilung) der Kugeln auf die Seitenwände der Kanalstränge. Dabei wird der gesamte Wirkungsgrad des Systems erhöht. Der Sperrfaktor wirkt unter ungünstigen Straßenverhältnissen sowohl beim Vorwärts- als auch Rückwärtsgang optimal. Das Differential arbeitet bei allen Geschwindigkeiten des Fahrzeugs automatisch. Dabei mischen sich die Sperrungs- und Differenzierungsvorgänge ineinander nicht ein, denn die Rückmeldung des Geräts von der Strasse wird verbessert, auf der das Kraftfahrzeug fährt. Dabei verbessern sich die Fahrbarkeit und die Sicherheit. Es hält das Fahrzeug stabil und macht alle unwegsamen Straßen befahrbar. Beim Bremsen mit dem Motor erhöht die Selbstsperrung des Geräts die Wirksamkeit des sicheren Bremsens des Kraftfahrzeugs.

Das Differential weist durch den maximalen Sperrungswirkungsgrad eine höhere Festigkeit auf. Es lässt die Bewegung der Kugeln bei jedem Rutschen des Fahrzeugs nicht zu. Dadurch werden eine intensive Erwärmung und ein Verschleiß des Mechanismus ausgeschlossen.

Die durchgeführten Patentrecherchen haben keine analogen, technischen Lösungen ergeben. Dies ermöglicht es, eine Schlussfolgerung über die Neuheit und das Erfindungsniveau der technischen Lösung gemäß der Erfindung zu ziehen.

Die inländische Industrie verfügt über alle Mittel (Materialien, Ausrüstung und Technologie), die für die Anfertigung des Differentials gemäß der Erfindung und dessen breite Verwendung in Transportmitteln notwendig sind.

Die Erfindung wird nun anhand von Ausführungsbeispielen näher erläutert. Es zeigen:

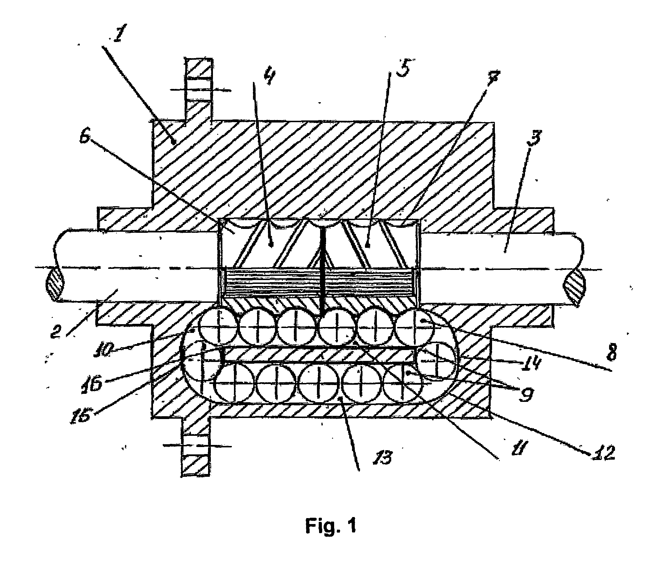

- Fig. 1: ein Selbstsperrdifferential gemäß der Erfindung im Längsschnitt,
- Fig. 2: eine geschlossene Kette aus einer ungeraden Kugelmenge, die im geschlossenen, rechteckigen Kanal des Differentials der Fig. 1 positioniert ist,
- Fig. 3: ein Abschnitt der Kugelkette, wobei die Winkelspitze des rechteckigen Kanals zwischen zwei benachbarten Kugeln liegt,
- Fig. 4: ein Abschnitt der Kugelkette, wobei eine Kugel an der Winkelspitze des rechteckigen Kanals liegt.

Das Kfz-Selbstsperrdifferential weist Folgendes auf:
- ein Antriebsgehäuse, bei dem mit den Halbachsen 2 und 3 verbundene Halbachsenelemente 4 und 5 zueinander koaxial ausgerichtet sind, wobei diese Elemente auf der Außenfläche Spiralnuten 6 und 7 gegenläufiger Richtung der Spirale aufweisen, und
- Wälzkörper in Form von Kugeln 8, die als Kette 9 mindestens einen im Antriebsgehäuse 1 ausgebildeten, geschlossenen Kanal 10 füllen. Ein Teil des geschlossenen Kanals 10 (Arbeitsstrang 11) ist zum Eintauchen (Einführen) von Kugelsegmenten 8 der Kette 9 in die Spiralnuten 6 und 7 der Halbachsenelemente 4 und 5 geöffnet.

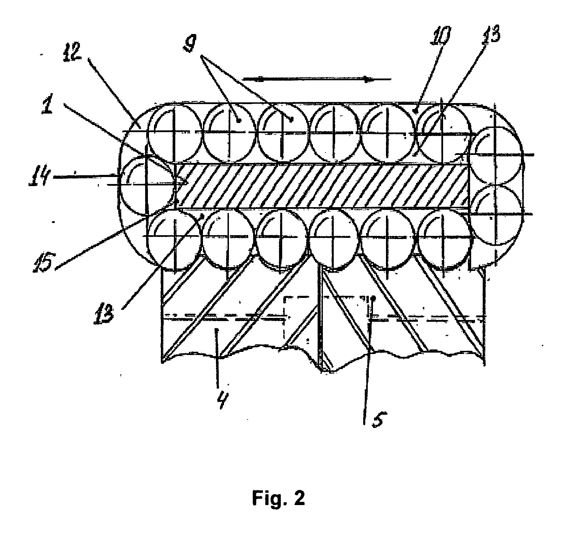

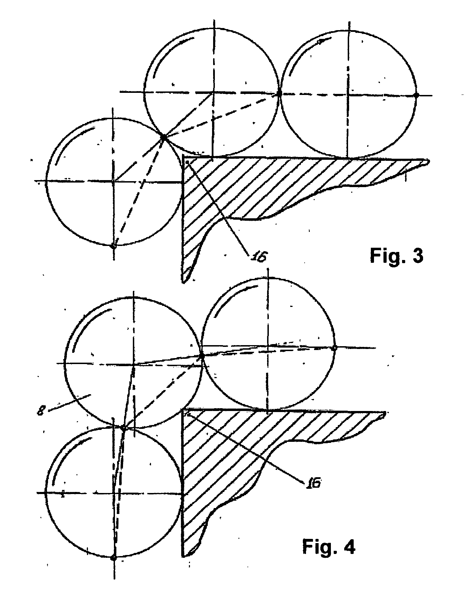

Der geschlossene Kanal 10 ist im Längsschnitt rechteckig mit abgerundeten Außenecken ausgeführt. Der Arbeitsstrang 11 und der Rücklaufstrang 13 des Kanals sind mit geradlinigen Strecken (Strängen) 14 und 15 im rechten Winkel verbunden. Dabei werden nur die Außenecken 12 des gebildeten Rechtecks abgerundet. Der Querschnitt aller Stränge des geschlossenen Kanals 10 ist gleich dem Durchmesser der Kugeln 8. Die Menge der Kugeln 8 im Kanal 10 ist ungerade. Der geschlossene Kanal 10 liegt im tangentialen (s. Beschreibung zu SU 1 507 603, Fig. 2) oder radialen Schnitt des Antriebsgehäuses 1. Es kann mehr als ein geschlossener Kanal 10 im Gehäuse 1 des Geräts vorhanden sein. Der Arbeitsstrang 11 und der Rücklaufstrang 13 des Kanals können dicht aneinander gebracht werden. Der Querschnitt der Stränge im Kanal 10 kann ein beliebiges Profil mit dem darin eingeschriebenen Durchmesser der Kugel 8 aufweisen: Kreis, Polygon, Quadrat, Dreieck usw. Die Spiralnuten 6 und 7 auf der Oberfläche der Halbachsenelemente 4 und 5 können ebenso ein beliebiges Profil mit dem darin eingeschriebenen Kugelsegment aufweisen: Kreis, Polygon, Quadrat, Dreieck usw. Die Kugelketten im geschlossenen Kanal 10 können unabhängig voneinander sein. Alternativ können diese Kugelketten in einer gemeinsamen, geschlossenen Kette für eine beliebige Menge der geschlossenen Kanäle (wie beim Patent RU Nr. 38871, Abb. 3, 4) vereinigt werden. Die gerade Menge der geschlossenen Kanäle 10 im Antriebsgehäuse 1 mit der ungeraden Menge der Kugeln 8 in jedem Kanal 10 macht dabei die gesamte Kugelmenge im Differential gerade.

Das Differential arbeitet folgendermaßen.

Bei der geradlinigen Bewegung des Fahrzeugs auf einer guten Straße wird die Drehung des Antriebsgehäuses 1 über die Kugeln 8 an die Halbachsen 2 und 3 des Fahrzeugs und weiter an die Antriebsräder übertragen. Die Kugeln 8 kommen mit den Spiralnuten 6 und 7 der Halbachsenelemente 4 und 5 in Berührung. Dadurch wird für die Antriebsräder die gleiche Winkelgeschwindigkeit sichergestellt. Wenn das Fahrzeug Kurven fährt bzw. eines der Antriebsräder auf eine Unebenheit auf der Straße (Vertiefung oder Erhöhung) kommt, streben folglich die Halbachsen 2 und 3 mit den Halbachsenelementen 4 und 5 danach, sich mit verschiedenen Winkelgeschwindigkeiten zu drehen. Dabei beginnen die Kugeln 8, sich im rechteckigen Kanal 10 zu bewegen, ohne die Kurvenbewegung des Kraftfahrzeugs zu behindern. Wenn eines der Antriebsräder auf eine schlüpfrige Strecke kommt, erfolgt eine rasche Verminderung der Bodenhaftung. Die Kugeln 8 im Gerät werden durch die Halbachsenelemente 4 und 5 ausgekeilt. Das Differential wird gesperrt und überträgt automatisch die Leistung an das Rad. Die Bodenhaftung des Rades ist besser. Das Auto fährt weiter, ohne zu rutschen.

Die Kette 9 der Kugeln 8 ist im geschlossenen, rechteckigen Kanal 10 positioniert. Diese Kette 9 soll gemäß den Arbeitsbedingungen des Differentials die minimalen Abstände voneinander und von den Wänden des Kanals 10 einhalten. Diese Kette 9 der Kugeln 8 wird eine maximale Selbstbremsung aufweisen. Die Selbstbremsung wird durch die Bewegung der Kugeln 8 über die rechten Winkel 16 des Kanals 10 beim Betrieb des Geräts sichergestellt.

Die ungerade Anzahl der Kugeln 8 im geschlossenen, rechteckigen Kanal 10 gewährleistet eine freie Bewegung der Kette der Kugeln 8 mit einem unveränderlichen, minimalen Abstand von den Kugeln 8. Die Bewegung der Kugeln 8 im rechteckigen Kanal 9 führt zur zyklischen Veränderung der Länge eines Teils der geschlossenen Kette 9. Wenn die Kugel 8 zur Winkelspitze kommt, beginnt die Länge dieses Teils der geschlossenen Kette 9 der Kugeln 8, sich gleichmäßig zu vermindern. Dabei vergrößert sich synchron der andere Teil der Kette 9, denn die Spitze eines anderen Winkels 16 des Kanals 10 befindet sich zu diesem Zeitpunkt zwischen den Kugeln 8. Anhand eines Abschnitts der Kette 9 aus drei Kugeln 8 (Figuren 3 und 4) wird gezeigt, wie sich die Sehnenlängen an den Berührungspunkten der Kugeln 8 miteinander verändern.

Die Summe der Sehnenlängen der Kugeln 8 (mit Strichlinien dargestellt) ist in Fig. 3 größer, in Fig. 4 um 12-14 % kleiner. Beim Ankommen der nächsten Kugeln 8 an den Winkeln des rechteckigen Kanals 10 wiederholt sich der Zyklus. Bei der Bewegung der geschlossenen Kette mit der ungeraden Menge der Kugeln 8 über die Winkel 16 des rechteckigen Kanals 10 verlängert sich deshalb der Teil der Kette 9. Dieser Teil der Kette 9 verläuft über zwei beliebige Winkel des Kanals 10. Der andere Teil der Kette 9 verläuft über zwei andere Winkel und vermindert sich. Dies erfolgt synchron. In diesem Fall wird die gesamte Länge der geschlossenen Kette und werden folglich die minimalen Abstände zwischen den Kugeln 8 eingehalten.

Wenn die Kugelmenge gerade wäre, hätte sich im geschlossenen Kanal nicht ein Teil, sondern die ganze Kette während der Bewegung an allen vier Winkeln verlängert oder verkürzt. Dabei wären die Kugeln ausgekeilt, oder die Abstände zwischen ihnen wären vergrößert. Bei dieser instabilen Kettenlänge ist das Differential nicht funktionsfähig.

Vier Jahre lang wurden vom Anmelder zwölf Differentialversionen für verschiedene Kfz-Typen entwickelt, angefertigt und getestet. Beim Prüfstandversuch und Testen an Fahrzeugen unter verschiedenen Klimaverhältnissen haben alle Differentiale gute Leistungen gezeigt.

Sowohl beim Vorwärtsgang als auch beim Rückwärtsgang des Fahrzeugs funktioniert das Gerät einwandfrei als Differential in klassischer Ausführung, das die Führung des Fahrzeugs nicht stört. Die Fahreigenschaften auf unwegsamen Gelände und die Zuverlässigkeit unter ungünstigen Wetterverhältnissen haben sich verbessert. Die Stabilität des Fahrzeuglaufs auf Glatteis, insbesondere in Kurven hat sich erhöht. Beim Testen wurden die Fahrzeuge von verschieden, qualifizierten Fahrern von Anfängern bis zu erfahrenen Autorennfahrern gefahren. Alle haben verbesserte, fahrdynamische Eigenschaften verzeichnet.

## Patentansprüche

1. Kfz-Selbstsperrdifferential, das Folgendes aufweist:
- ein Antriebsgehäuse, bei dem die mit den Halbachsen verbundenen Halbachsenelemente zueinander koaxial ausgerichtet sind, wobei diese Elemente auf der Außenfläche Spiralnuten gegenläufiger Richtung der Spirale aufweisen,
- Wälzkörper in Form von Kugeln, die kettenweise mindestens einen im Antriebsgehäuse ausgebildeten, geschlossenen Kanal füllen, wobei der Teil des Kanals zum Eintauchen von Kugelsegmenten in die Spiralnuten geöffnet ist,
**dadurch gekennzeichnet,**
**dass** der geschlossene Kanal im Längsschnitt rechteckig mit abgerundeten Außenecken ausgeführt ist, der Querschnitt der Stränge beim rechteckigen, geschlossenen Kanal dem Kugeldurchmesser gleich ist und die Kugelmenge im Kanal ungerade ist.
